# EUROPEAN PATENT APPLICATION

(11) **EP 4 832 415 A1**
(43) Date of publication of application: **28.10.2026**
(21) Application number: 24918521.6
(22) Date of filing: 18.12.2024
(51) Int. Cl.: H04L 9/32, G06F 21/44

(54) **TO-BE-AUTHENTICATED DEVICE, AUTHENTICATION DEVICE, METHOD FOR OUTPUTTING AUTHENTICATION REQUEST, AUTHENTICATION METHOD, AND PROGRAM**

(30) Priority: 16.01.2024 JP 2024004521
(71) Applicant: Sinumy Corporation, Osaka-shi, Osaka 5330033 (JP)
(72) Inventor: ADACHI, Yasuhiko, Osaka-shi, Osaka 530-0017 (JP); ISOBE, Takanori, Osaka-shi, Osaka 530-0017 (JP); NOMURA, Kouichi, Osaka-shi, Osaka 530-0017 (JP)
(74) Representative: Betten & Resch
(86) International application number: PCT/JP2024/044707
(87) International publication number: WO 2025/154464

(57) **Abstract**

In order to realize secure authentication by preventing spoofing, an authentication-target apparatus 1 includes: an initial data acquisition unit 12 that acquires initial data containing a user identifier and unique information; a first encryption unit 13 that generates first data using the initial data; a second data acquisition unit 14 that acquires second data; a second encryption unit 15 that generates second encrypted data by encryption of the second data using the first data; and an output unit 16 that outputs a plurality of authentication requests each including the initial data and the second encrypted data. An authentication apparatus 2 includes: an acceptance unit 21 that accepts a plurality of authentication requests; an encryption unit 22 that generates first data using the authentication requests; a determination unit 24 that determines whether or not shared data corresponding to the authentication requests matches shared data in a storage unit 23, using the first data; and an authentication unit 25 that determines that the authentication-target apparatus 1 is legitimate in a case in which the pieces of unique information in the plurality of authentication requests are consistent and that shared data thereof matches the shared data.

## Description

### Technical Field

The present invention relates to an authentication-target apparatus, an authentication apparatus, an authentication request output method, an authentication method, and a program.

### Background Art

Conventionally, authentication apparatuses are known that receive a plurality of authentication requests transmitted from an authentication-target apparatus and determine whether or not the authentication-target apparatus is legitimate using the plurality of authentication requests (see Patent Document 1, for example).

### Citation List

### Patent Document

Patent Document 1: WO 2020/080301

### Summary of Invention

### Technical Problem

In cases where an authentication apparatus authenticates an authentication-target apparatus using a plurality of authentication requests transmitted from the authentication-target apparatus, there is a demand for performing secure authentication by preventing spoofing.

The present invention was made in response to the above circumstances, and it is an object thereof to provide an authentication-target apparatus, an authentication apparatus, an authentication request output method, an authentication method, and a program with which secure authentication can be realized by preventing spoofing.

### Solution to Problem

In order to achieve the above-described object, an aspect of the present invention is directed to an authentication-target apparatus including: an initial data acquisition unit that acquires initial data containing a user identifier for identifying a user and unique information that is unique; a first encryption unit that generates first data by acquisition of first encrypted data obtained by encryption of the initial data; a second data acquisition unit that acquires second data containing shared data shared with an authentication apparatus; a second encryption unit that generates second encrypted data by encryption of the second data using the first data; and an output unit that outputs, to the authentication apparatus, a plurality of different authentication requests each including the initial data and the second encrypted data.

With this configuration, the authentication apparatus that has accepted a plurality of authentication requests determines whether or not an authentication-target apparatus is legitimate based on whether or not shared data corresponding to the second encrypted data contained in the authentication requests matches shared data shared between a legitimate authentication-target apparatus and the authentication apparatus, and whether or not the pieces of unique information contained in the plurality of authentication requests are consistent, and thus it is possible to realize secure authentication by preventing spoofing. Furthermore, the first encrypted data is acquired by encryption of the initial data, and thus it is difficult to predict the first data from the initial data.

Furthermore, the authentication-target apparatus according to an aspect of the present invention may be such that the unique information includes at least one of a time, a counter value, and a random number value.

With this configuration, it is easy to acquire the unique information.

Furthermore, the authentication-target apparatus according to an aspect of the present invention may be such that the first encryption unit acquires first encrypted data obtained by encryption of the initial data using an encryption key corresponding to the user identifier contained in the initial data.

With this configuration, it is more difficult to predict the first data from the initial data.

Furthermore, the authentication-target apparatus according to an aspect of the present invention may be such that the first encryption unit acquires first encrypted data obtained by encryption of data having a predetermined data amount and containing the initial data, using the encryption key.

With this configuration, it is possible to make the data amount of the first encrypted data to a predetermined data amount.

Furthermore, the authentication-target apparatus according to an aspect of the present invention may be such that the first encryption unit generates the first data by reducing a data amount of the first encrypted data.

With this configuration, for example, it is possible to further reduce the data amount of the authentication requests.

Furthermore, the authentication-target apparatus according to an aspect of the present invention may be such that the first encryption unit reduces the data amount by hashing the first encrypted data.

With this configuration, it is possible to reduce the data amount through simple processing, and to make prediction of the first encrypted data from the first data difficult.

Furthermore, the authentication-target apparatus according to an aspect of the present invention may be such that the first encryption unit reduces the data amount by extracting a part of the first encrypted data.

With this configuration, it is possible to reduce the data amount through simple processing, and to make prediction of the first encrypted data from the first data difficult.

Furthermore, the authentication-target apparatus according to an aspect of the present invention may be such that the first data and the second data have a same data amount, and the second encryption unit generates second encrypted data that is an exclusive OR of the first data and the second data.

With this configuration, it is possible to encrypt the second data through simple processing.

Furthermore, the authentication-target apparatus according to an aspect of the present invention may be such that the second data acquisition unit acquires the shared data from the authentication apparatus.

With this configuration, even when the authentication-target apparatus does not have a shared data generator, it is possible to share the shared data between the authentication apparatus and the authentication-target apparatus.

Furthermore, the authentication-target apparatus according to an aspect of the present invention may be such that the shared data includes a random number.

With this configuration, for example, it is possible to make the shared data unique data.

Furthermore, an aspect of the present invention is directed to an authentication apparatus including: an acceptance unit that accepts, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data; an encryption unit that generates first data by acquisition of first encrypted data obtained by encryption of the initial data contained in the authentication requests accepted by the acceptance unit; a storage unit in which shared data shared with a legitimate authentication-target apparatus is stored; a determination unit that determines whether or not shared data corresponding to the second encrypted data contained in the authentication requests accepted by the acceptance unit matches the shared data stored in the storage unit, using the first data generated by the encryption unit; an authentication unit that determines that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and an authentication result output unit that outputs an authentication result that is a determination result obtained by the authentication unit.

With this configuration, whether or not an authentication-target apparatus is legitimate is determined based on whether or not shared data corresponding to the second encrypted data contained in the authentication requests matches shared data shared between a legitimate authentication-target apparatus and the authentication apparatus, and whether or not the pieces of unique information contained in the plurality of authentication requests are consistent, and thus it is possible to realize secure authentication by preventing spoofing. Furthermore, the first encrypted data is acquired by encryption of the initial data, and thus it is difficult for a third party to predict the first data.

Furthermore, the authentication apparatus according to an aspect of the present invention may be such that the unique information includes at least one of a time, a counter value, and a random number value.

With this configuration, it is easy to acquire the unique information.

Furthermore, the authentication apparatus according to an aspect of the present invention may be such that the encryption unit acquires first encrypted data obtained by encryption of the initial data contained in the authentication requests accepted by the acceptance unit, using an encryption key corresponding to the user identifier contained in the initial data.

With this configuration, it is more difficult for a third party to predict the first data.

Furthermore, the authentication apparatus according to an aspect of the present invention may be such that the encryption unit acquires first encrypted data obtained by encryption of data having a predetermined data amount and containing the initial data contained in the authentication requests accepted by the acceptance unit, using the encryption key.

With this configuration, it is possible to make the data amount of the first encrypted data to a predetermined data amount.

Furthermore, the authentication apparatus according to an aspect of the present invention may be such that the encryption unit generates the first data by reducing a data amount of the acquired first encrypted data.

With this configuration, for example, it is possible to further reduce the data amount of the authentication requests.

Furthermore, the authentication apparatus according to an aspect of the present invention may be such that the first data and the second data have a same data amount, and the second encrypted data is an exclusive OR of the first data and the second data.

With this configuration, it is possible to encrypt the second data through simple processing.

Furthermore, the authentication apparatus according to an aspect of the present invention may be such that the authentication apparatus further includes a data output unit that generates shared data, outputs the generated shared data to the authentication-target apparatus, and accumulates the generated shared data in the storage unit, wherein the second encrypted data contained in the authentication requests accepted by the acceptance unit is data obtained by encryption of second data containing the shared data output by the data output unit.

With this configuration, even when the authentication-target apparatus does not have a shared data generator, it is possible to share the second data between the authentication apparatus and the authentication-target apparatus.

Furthermore, the authentication apparatus according to an aspect of the present invention may be such that the shared data includes a random number.

With this configuration, for example, it is possible to make the shared data unique data.

Furthermore, an aspect of the present invention is directed to an authentication request output method including: a step of acquiring initial data containing a user identifier for identifying a user and unique information that is unique; a step of generating first data by acquisition of first encrypted data obtained by encryption of the initial data; a step of acquiring second data containing shared data shared with an authentication apparatus; a step of generating second encrypted data by encryption of the second data using the first data; and a step of outputting, to the authentication apparatus, a plurality of different authentication requests each including the initial data and the second encrypted data.

Furthermore, an aspect of the present invention is directed to an authentication method including: a step of accepting, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data; a step of generating first data by acquisition of first encrypted data obtained by encryption of the initial data contained in the accepted authentication requests; a determination unit that determines whether or not shared data corresponding to the second encrypted data contained in the accepted authentication requests matches shared data stored in a storage unit in which shared data shared with a legitimate authentication-target apparatus is stored, using the first data generated in the step of generating first data; a step of determining that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and a step of outputting an authentication result that is a determination result obtained in the step of determining whether or not the authentication-target apparatus subjected to authentication is legitimate.

### Advantageous Effects of Invention

With the authentication-target apparatus, the authentication apparatus, the authentication request output method, the authentication method, and the program according to an aspect of the present invention, it is possible to realize secure authentication by preventing spoofing.

### Brief Description of Drawings

FIG. 1 is a block diagram showing the configuration of an authentication system according to an embodiment of the present invention.
FIG. 2 is a diagram showing transmission and reception of information between an authentication-target apparatus and an authentication apparatus in the embodiment.
FIG. 3 is a chart illustrating generation of an authentication request in the embodiment.
FIG. 4 is a chart illustrating authentication using the authentication request in the embodiment.
FIG. 5 is a flowchart showing an operation of the authentication-target apparatus in the embodiment.
FIG. 6 is a flowchart showing an operation of the authentication apparatus in the embodiment.
FIG. 7 is a diagram showing an example of the configuration of a computer system in the embodiment.

### Description of Embodiment

Hereinafter, an authentication-target apparatus, an authentication apparatus, an authentication request output method, and an authentication method according to the present invention will be described based on an embodiment. Note that constituent elements or steps denoted by the same reference numerals are the same as or similar to each other in the following embodiments, and thus a description thereof may not be repeated. The authentication-target apparatus according to this embodiment outputs a plurality of different authentication requests, each including initial data that is plaintext data containing unique information, and second encrypted data acquired by encryption of second data using first data acquired using the initial data. The authentication apparatus according to this embodiment performs authentication of an authentication-target apparatus based on a determination result as to whether or not shared data corresponding to the second encrypted data contained in the authentication requests matches shared data stored in the authentication apparatus and whether or not the pieces of unique information contained in the plurality of authentication requests are consistent.

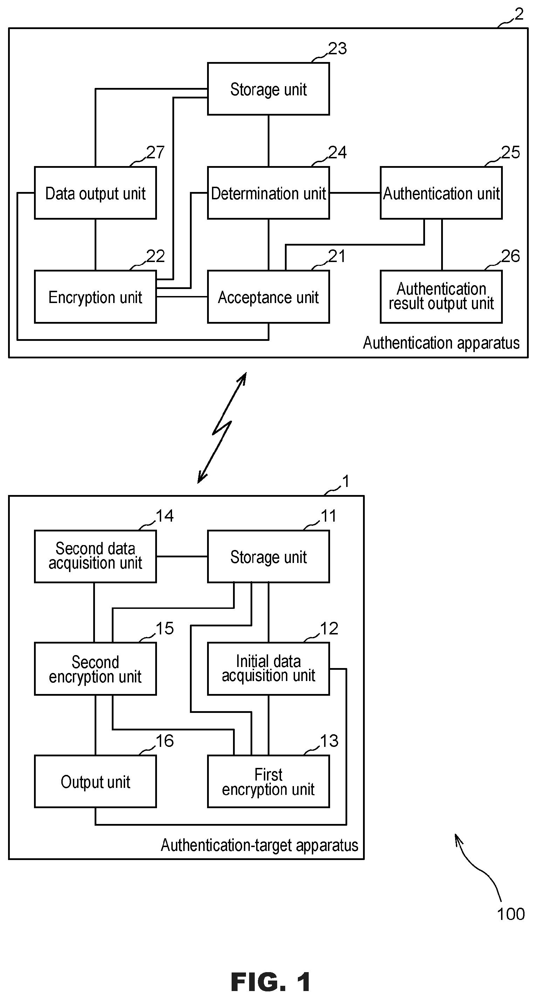

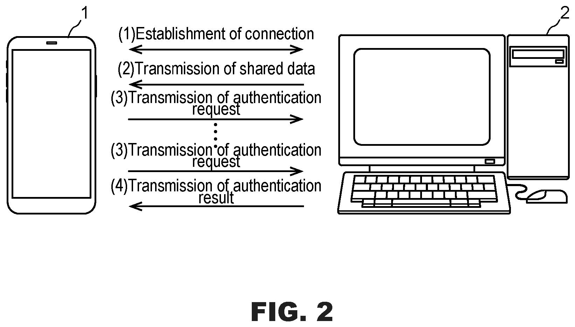

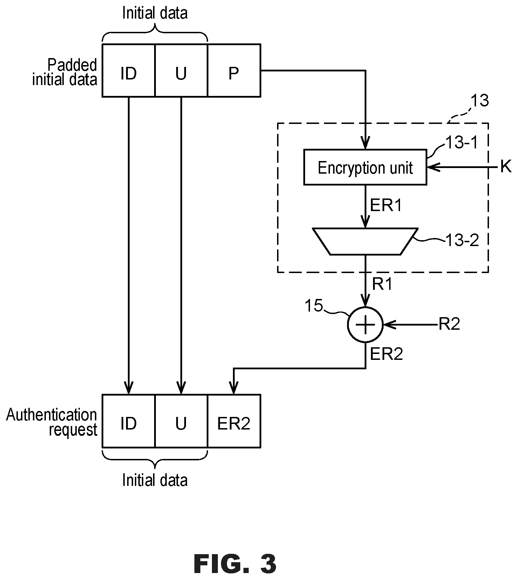

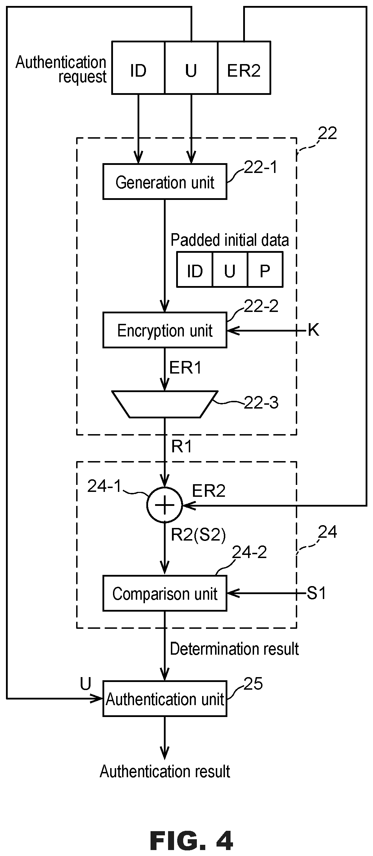

FIG. 1 is a block diagram showing the configuration of an authentication system 100 according to this embodiment, FIG. 2 is a diagram showing information that is transmitted and received between an authentication-target apparatus 1 and an authentication apparatus 2, FIG. 3 is a chart illustrating an example of processing regarding the generation of an authentication request in the authentication-target apparatus 1, and FIG. 4 is a chart illustrating an example of processing regarding authentication in the authentication apparatus 2 using a plurality of authentication requests.

As shown in FIG. 1, the authentication system 100 according to this embodiment includes an authentication-target apparatus 1 and an authentication apparatus 2. Although FIG. 1 shows a case in which the authentication system 100 includes one authentication-target apparatus 1 and one authentication apparatus 2, but there is no limitation to this. It is also possible that the authentication system 100 has a plurality of authentication-target apparatuses 1 and one authentication apparatus 2. In this case, a plurality of authentication requests may be output from each of the plurality of authentication-target apparatuses 1 to the authentication apparatus 2. In this embodiment, a case will be mainly described in which information exchange between the authentication-target apparatus 1 and the authentication apparatus 2 is performed through communication, that is, through transmission and reception of information, and cases other than that will be described later. The communication is typically wireless communication.

There is no limitation on the wireless communication standard between the authentication-target apparatus 1 and the authentication apparatus 2. The wireless communication may be performed, for example, using Bluetooth (registered trademark) Low Energy, Bluetooth (registered trademark) BR (Basic Rate)/EDR (Enhanced Data Rate), a wireless LAN (IEEE 802.11), IEEE 802.15.4 such as ZigBee (registered trademark), or any other wireless communication standard. The wireless communication may be, for example, short-range wireless communication. As an example, the authentication process of the authentication-target apparatus 1 may be performed after (1) establishment of connection such as wireless communication between the authentication-target apparatus 1 and the authentication apparatus 2, as shown in FIG. 2. The establishment processing of communication between the two apparatuses prior to the start of the authentication process is not necessarily required, and the authentication process may be performed without establishing such communication.

In this embodiment, an authentication request is output from the authentication-target apparatus 1 to the authentication apparatus 2. The authentication-target apparatus 1 that outputs the authentication request may be either a legitimate authentication-target apparatus 1 or an illegitimate apparatus, that is, an apparatus of an attacker who is a malicious third party. At the time when the authentication apparatus 1 accepts the authentication request, it cannot distinguish between these apparatuses. Therefore, for the sake of ease of description, an apparatus that outputs the authentication request will be referred to as an authentication-target apparatus 1. The authentication-target apparatus 1 determined to be legitimate will be referred to as a legitimate authentication-target apparatus 1, and the authentication-target apparatus 1 determined not to be legitimate, that is, an attacker's apparatus, will be referred to as an illegitimate authentication-target apparatus 1.

In FIG. 1, the authentication-target apparatus 1 according to this embodiment includes a storage unit 11, an initial data acquisition unit 12, a first encryption unit 13, a second data acquisition unit 14, a second encryption unit 15, and an output unit 16. The authentication-target apparatus 1 may be, for example, a portable information terminal having a communication function, such as a smartphone, a tablet terminal, a PDA (personal digital assistant), a laptop, or a transceiver, or may be other devices. In this embodiment, a case will be mainly described in which the authentication-target apparatus 1 is a smartphone.

For example, a user identifier for identifying a user of the authentication-target apparatus 1 may be stored in the storage unit 11. There is no particular limitation on the user identifier as long as it can identify the user. For example, the user identifier may be a telephone number or an e-mail address of the user, or may be a character string or the like assigned to the user. Alternatively, as the user identifier, for example, an apparatus identifier for identifying the authentication-target apparatus 1 may be used. The apparatus identifier may be, for example, an address of the authentication-target apparatus 1 or the like. For example, an encryption key corresponding to the user identifier stored in the storage unit 11 may be stored in the storage unit 11. For example, shared data may be stored in the storage unit 11. The encryption key and he shared data will be described later.

There is no limitation on the procedure in which information is stored in the storage unit 11. For example, information may be stored in the storage unit 11 via a recording medium, a communication line, or an input device, or the information may be accumulated in the storage unit 11 by another constituent element. The storage unit 11 is preferably realized by a non-volatile storage medium, but can also be realized by a volatile storage medium. Examples of the storage medium may include a semiconductor memory, a magnetic disk, and an optical disk.

The initial data acquisition unit 12 acquires initial data containing a user identifier for identifying a user and unique information that is unique. The initial data acquisition unit 12 may, for example, read the user identifier from the storage unit 11. The initial data acquisition unit 12 may, for example, generate the unique information, or may receive the unique information from another constituent element or device.

The pieces of unique information acquired by the initial data acquisition unit 12 may be, for example, different information. For example, different initial data may be acquired each time the initial data acquisition unit 12 acquires initial data. In this case, the unique information may be information unique to an authentication request. That is to say, for each authentication request, the unique information contained in the authentication request may be different. Each piece of unique information being different may mean that the unique information does not overlap within a period required for authentication. That is to say, the unique information may be information that does not overlap within a predetermined period. The period may be, for example, about 100 years. Therefore, the unique information may overlap after the period has elapsed. As an example, if the unique information does not overlap for 100 years, unique information acquired at a certain point in time and unique information acquired after 101 years have elapsed from that point in time may overlap. For example, if the authentication system 100 performs authentication for an event held on a specific day, the period during which the unique information does not overlap may be about one or two days.

The unique information may include, for example, at least one of a time, a counter value, and a random number value. Typically, information constituted by information that is unique such as a time, a counter value, or a random number value and information that is not unique (e.g., information in which a higher-order bit is information that is unique, and a lower-order bit is information that is not unique) is eventually unique information. Accordingly, the unique information may be constituted by information that is unique and information that is not unique in this manner.

The time may be, for example, the time at which the unique information is acquired. Since the period from the acquisition of the unique information to the transmission of the authentication request is short, this time may be considered to be substantially the time at which the authentication request is transmitted. The accuracy of the time is preferably shorter than the transmission intervals between the plurality of authentication requests. For example, the time may be a time expressed in units of milliseconds. The time may be, for example, a time representing elapsed time with reference to a predetermined point in time. The time may be, for example, a UNIX time. In this case, the time may be considered to include hour/minute, or year/month/day. The initial data acquisition unit 12 may acquire the current time using, for example, a clock unit (not shown). Among the obtained time values, lower-order digits corresponding to a desired cycle may be used as the unique information. The time may include, for example, year/month/day/hour/minute/second.

The counter value may be, for example, a value obtained by incrementing or decrementing a numerical value at predetermined intervals. The random number value may be generated, for example, using a random number table or a function for generating a random number. As an example, the counter value or the random number value may vary depending on the time period. For example, the counter value or the random number value generated on a certain day may be different from the counter value or the random number value generated on the following day. In this manner, it is possible to prevent a malicious third party from reusing unique information including a counter value or a random number value, contained in an authentication request transmitted from the legitimate authentication-target apparatus 1, thereby preventing spoofing by the malicious third party.

Furthermore, the initial data may contain information other than the user identifier and the unique information. The information contained in the initial data other than the user identifier and the unique information may be, for example, information that the user of the authentication-target apparatus 1 intends to transmit to the authentication apparatus 2.

The first encryption unit 13 generates first data using the initial data acquired by the initial data acquisition unit 12. For example, the first encryption unit 13 may generate first data by acquisition of first encrypted data obtained by encryption of the initial data using an encryption key corresponding to the user identifier contained in the initial data. For example, the first encryption unit 13 may generate first data by acquisition of first encrypted data obtained by encryption of data having a predetermined data amount and containing the initial data, using an encryption key corresponding to the user identifier contained in the initial data. The data having a predetermined data amount and containing the initial data may be, for example, data having a predetermined data amount obtained by performing padding on the initial data. The padding method may be predetermined, for example. In this case, for example, as shown in FIG. 3, the first encryption unit 13 may include an encryption unit 13-1 that encrypts padded initial data containing initial data containing a user identifier ID and unique information U and padded information P, using an encryption key K corresponding to the user identifier ID contained in the initial data, and outputs first encrypted data ER1. The encryption performed by the encryption unit 13-1 may be performed using, for example, AES (Advanced Encryption Standard) or another algorithm. The encryption key K may be, for example, an encryption key unique to a user identified by the user identifier contained in the initial data, that is, an encryption key that can be known only to the user and cannot be known to other users. The encryption key may be stored in the storage unit 11, for example.

The encryption key used by the first encryption unit 13 may be, for example, a key for symmetric-key cryptography, or a public key or a private key for public-key cryptography. Regardless of which encryption key is used, it is preferable that the encryption key used in the first encryption unit 13 of the authentication-target apparatus 1 is the same as the encryption key used in a later-described encryption unit 22 of the authentication apparatus 2. As an example, if the encryption key used by the first encryption unit 13 of the authentication-target apparatus 1 is a public key of public-key cryptography, it is preferable that the same public key is used in the encryption unit 22 of the authentication apparatus 2 as well. Regardless of which encryption key is used, it is preferable that the encryption key is different for each authentication-target apparatus 1, that is, for each user.

Furthermore, the first encryption unit 13 may, for example, use the first encrypted data itself as the first data, or may generate the first data by reducing the data amount of the first encrypted data. In the latter case, for example, the first encryption unit 13 may reduce the data amount by hashing the first encrypted data, or may reduce the data amount by extracting a part of the first encrypted data. The extraction of a part of the first encrypted data may include, for example, extraction of higher-order bits or lower-order bits corresponding to a predetermined number of bits of the first encrypted data, or extraction of values with predetermined bits (digits) in a bit string of the first encrypted data. In this embodiment, a case will be mainly described in which the first data is generated by hashing the first encrypted data. In this case, for example, as shown in FIG. 3, the first encryption unit 13 may include a hash generation unit 13-2 that hashes first encrypted data ER1 and outputs first data R1.

The second data acquisition unit 14 acquires second data containing shared data shared with the authentication apparatus 2. For example, the second data acquisition unit 14 may acquire the shared data from the authentication apparatus 2, or may generate the shared data. In this embodiment, the former case will be mainly described. If information exchange between the authentication-target apparatus 1 and the authentication apparatus 2 is performed through communication, (2) transmission of shared data from the authentication apparatus 2 to the authentication-target apparatus 1 may be performed as shown in FIG. 2, and then the second data acquisition unit 14 may receive the transmitted shared data from the authentication apparatus 2. If the second data acquisition unit 14 generates the shared data, it is preferable that the shared data is generated following the same algorithm as that used by the authentication apparatus 2. That is because this enables the authentication-target apparatus 1 and the authentication apparatus 2 to share the shared data. The second data may be, for example, the shared data, or may include data other than the shared data. In the latter case, for example, the second data may contain information that the user of the authentication-target apparatus 1 intends to transmit to the authentication apparatus 2 and that is not desired to be known by a third party. In this embodiment, a case will be mainly described in which the second data is the shared data.

The shared data may include, for example, a random number. In this case, the shared data may be, for example, random number data, or may include data other than random number data. Alternatively, data other than a random number may be used as the shared data. In this embodiment, a case will be mainly described in which the shared data is a random number. It is preferable that shared data is different for each authentication-target apparatus 1, for example, but there is no limitation to this. In the former case, for example, the shared data may be information unique to one authentication process performed using a plurality of authentication requests for a certain authentication-target apparatus 1, and different shared data may be used in another authentication process, or alternatively, the same shared data may be used in a plurality of authentication processes. If different shared data is used in different authentication processes, for example, the shared data may be different for each authentication request used in a single authentication process, or the same shared data may be used for a plurality of authentication requests used in a single authentication process. In this embodiment, a case will be mainly described in which the shared data is different for each authentication-target apparatus 1 and is different for each authentication process, while the same shared data is used in a single authentication process. The second data acquisition unit 14 may accumulate, for example, the acquired shared data or second data in the storage unit 11.

The second encryption unit 15 acquires second encrypted data by encryption of the second data acquired by the second data acquisition unit 14, using the first data generated by the first encryption unit 13. The second encryption unit 15 may encrypt the second data, for example, using the first data as an encryption key. For example, as shown in FIG. 3, the second encryption unit 15 may acquire second encrypted data ER, which is an exclusive OR of first data R1 and second data R2. In this embodiment, this case will be mainly described. If the second encryption unit 15 calculates the exclusive OR of the first data and the second data, it is preferable that the data amount of the first data and the data amount of the second data are the same. The data amount being the same may mean, for example, that the numbers of bits are the same.

The output unit 16 outputs a plurality of different authentication requests to the authentication apparatus 2. The authentication requests are information containing the initial data acquired by the initial data acquisition unit 12 and the second encrypted data acquired by the second encryption unit 15. The authentication requests may include only the initial data and the second encrypted data, or may further include other information.

The plurality of authentication requests may respectively include a plurality of different pieces of initial data. In this manner, the plurality of authentication requests become respectively different pieces of information. The second encrypted data contained in a certain authentication request is data obtained by encryption of second data using the first data generated using the initial data contained in the authentication request. The second data used to acquire the second encrypted data contained in the plurality of authentication requests used in a single authentication process may be, for example, the same. On the other hand, since the first data is different each time the second encrypted data is acquired, the plurality of pieces of second encrypted data contained in the plurality of authentication requests used in a single authentication process are different from each other. The plurality of authentication requests used in a single authentication process are a plurality of authentication requests used in processing for determining whether or not the authentication-target apparatus 1 is legitimate.

An authentication request may be output after the entire authentication request is encrypted. Such encryption may be performed, for example, using an encryption key common to a plurality of authentication-target apparatuses 1 that transmit the authentication requests to the authentication apparatus 2. In this embodiment, a case will be mainly described in which such encryption is not performed.

The output may be, for example, transmission via a communication line to a predetermined device, display on a display device (e.g., a liquid crystal display, an organic EL display, etc.), printing by a printer, audio output by a speaker, or delivery to another constituent element. If information exchange between the authentication-target apparatus 1 and the authentication apparatus 2 is performed through communication, the output unit 16 may transmit the plurality of authentication requests to the authentication apparatus 2. In this case, as shown in FIG. 2, (3) transmission of an authentication request from the authentication-target apparatus 1 to the authentication apparatus 2 may be repeated a plurality of times. The output unit 16 may or may not include a device that performs output (e.g., a communication device, a display device, etc.). The output unit 16 may be realized by hardware, or may be realized by software or the like such as a driver that drives those devices.

Furthermore, if an authentication result is output from the authentication apparatus 2 to the authentication-target apparatus 1, the authentication-target apparatus 1 may include an acceptance unit that accepts the authentication result output from the authentication apparatus 2. If information exchange between the authentication-target apparatus 1 and the authentication apparatus 2 is performed through communication, the acceptance unit may receive the authentication result from the authentication apparatus 2. In this case, as shown in FIG. 2, (4) transmission of an authentication result from the authentication apparatus 2 to the authentication-target apparatus 1 may be performed, and the transmitted authentication result may be received by the authentication-target apparatus 1. The accepted authentication result may be, for example, output to the user of the authentication-target apparatus 1. The output may be, for example, display output or audio output.

In FIG. 1, the authentication apparatus 2 according to this embodiment includes an acceptance unit 21, an encryption unit 22, a storage unit 23, a determination unit 24, an authentication unit 25, an authentication result output unit 26, and a data output unit 27. The authentication apparatus 2 may be, for example, a device that performs authentication of the authentication-target apparatus 1 in an automatic ticket gate, a gate for entering a venue of an event or the like, a vending machine, a controller that locks and unlocks a door of a hotel or a rental conference room, a cash register, or the like, or may be an information terminal having a communication function, such as a computer or a smartphone, that performs authentication of the authentication-target apparatus 1. In this embodiment, a case will be mainly described in which the authentication-target apparatus 1 is an information terminal having a communication function.

The acceptance unit 21 accepts a plurality of different authentication requests from the authentication-target apparatus 1. If information exchange between the authentication-target apparatus 1 and the authentication apparatus 2 is performed through communication, the acceptance unit 21 may receive the plurality of authentication requests from the authentication-target apparatus 1. As described above, the accepted authentication requests each include initial data containing a user identifier for identifying a user and unique information that is unique, and second encrypted data generated using the initial data. As described above, the second encrypted data is data obtained by encryption of second data containing shared data, using the first data. The first data is data generated by acquisition of first encrypted data obtained by encryption of the initial data contained in the authentication requests, using an encryption key corresponding to the user identifier contained in the initial data. If the acceptance time of an authentication request is also used for authentication of the authentication-target apparatus 1, the acceptance unit 21 may, for example, acquire the acceptance time when the authentication request is accepted and provide the acceptance time to the authentication unit 25.

If an authentication request is encrypted before being output by the authentication-target apparatus 1, the encrypted authentication request may be decrypted after the authentication request is accepted. In this embodiment, as described above, a case will be mainly described in which such encryption and decryption are not performed.

The acceptance unit 21 may, for example, receive information transmitted via a wireless communication line or, as will be described later, may read displayed information, or receive information by other methods. The acceptance unit 21 may or may not include a device that performs acceptance (e.g., a communication device, an imaging device, etc.). The acceptance unit 21 may be realized by hardware, or may be realized by software or the like such as a driver that drives a predetermined device.

The encryption unit 22 generates first data using the initial data contained in the authentication requests accepted by the acceptance unit 21. It is preferable that the generation of the first data is performed in the same manner as the generation of the first data by the first encryption unit 13 of the authentication-target apparatus 1. That is because this enables the generation of the same first data as the first data generated in the authentication-target apparatus 1. The encryption unit 22 may, for example, generate first data by acquisition of first encrypted data obtained by encryption of the initial data contained in the authentication requests accepted by the acceptance unit 21, using an encryption key corresponding to the user identifier contained in the initial data. The encryption unit 22 may, for example, generate first data by acquisition of first encrypted data obtained by encryption of data having a predetermined data amount and containing the initial data contained in the authentication requests accepted by the acceptance unit 21, using an encryption key corresponding to the user identifier contained in the initial data. In this case, for example, as shown in FIG. 4, the encryption unit 22 may include a generation unit 22-1 that generates padded initial data having a predetermined data amount by performing padding on the initial data, and an encryption unit 22-2 that encrypts the padded initial data using an encryption key K corresponding to a user identifier ID contained in the initial data, and outputs first encrypted data ER1. For example, information in which user identifiers are associated with encryption keys may be stored in the storage unit 23, and the encryption unit 22 may acquire an encryption key K corresponding to the user identifier ID contained in the initial data, using that information.

Furthermore, the encryption unit 22 may, for example, use the first encrypted data itself as the first data, or may generate the first data by reducing the data amount of the first encrypted data. For example, the encryption unit 22 may reduce the data amount by hashing the first encrypted data, or may reduce the data amount by extracting a part of the first encrypted data. In this embodiment, the former case will be mainly described. In this case, for example, as shown in FIG. 4, the encryption unit 22 may include a hash generation unit 22-3 that hashes first encrypted data ER1 and outputs first data R1. As described above, the generation of the first data by the encryption unit 22 is performed in the same manner as the generation of the first data by the first encryption unit 13 of the authentication-target apparatus 1, and thus, a detailed description thereof has been omitted.

The shared data shared with the legitimate authentication-target apparatus 1 is stored in the storage unit 23. Sharing of the shared data with the legitimate authentication-target apparatus 1 may be performed, for example, by outputting the shared data from the authentication apparatus 2 to the authentication-target apparatus 1, or by generating the same shared data in both the authentication-target apparatus 1 and the authentication apparatus 2. In this embodiment, the former case will be mainly described. For example, information in which a user identifier is associated with shared data used in the authentication-target apparatus 1 of a user identified by the user identifier may be stored in the storage unit 23. In this manner, it is possible to specify the shared data corresponding to the user identifier. It is preferable that the shared data is different for each user identifier. As described above, encryption keys for respective users may also be stored in the storage unit 23.

There is no limitation on the procedure in which information is stored in the storage unit 23. For example, information may be stored in the storage unit 11 via a recording medium, a communication line, or an input device, or the information may be accumulated in the storage unit 11 by another constituent element. The storage unit 23 may be realized by a non-volatile storage medium or a volatile storage medium. Examples of the storage medium may include a semiconductor memory, a magnetic disk, and an optical disk.

The determination unit 24 determines whether or not shared data corresponding to the second encrypted data contained in the authentication request accepted by the acceptance unit 21 matches the shared data stored in the storage unit 23, using the first data generated by the encryption unit 22. The shared data corresponding to the second encrypted data contained in the authentication request is the shared data contained in the second data used to generate the second encrypted data. For example, it is possible to specify the second data corresponding to the second encrypted data, by decryption of the second encrypted data using the first data generated by the encryption unit 22, and it is further possible to specify the shared data contained in the second data. The shared data stored in the storage unit 23 may be, for example, the shared data stored in the storage unit 23 in association with the user identifier contained in the authentication request.

The determination unit 24 may, for example, acquire second data by decryption of the second encrypted data contained in the accepted authentication request, using the first data generated by the encryption unit 22, and compare shared data contained in the acquired second data and the shared data stored in the storage unit 23 in association with the user identifier contained in the authentication request, thereby determining whether or not they match each other. As an example, if encryption of the second data using the first data is performed in the authentication-target apparatus 1 by calculating an exclusive OR of the first data and the second data, decryption of the second encrypted data may be performed by calculating an exclusive OR of the second encrypted data and the first data. In this case, for example, as shown in FIG. 4, the determination unit 24 may include a calculation unit 24-1 that calculates an exclusive OR of second encrypted data ER2 contained in an authentication request and generated first data R1, and outputs second data R2, and a comparison unit 24-2 that compares shared data S1 stored in the storage unit 23 and shared data S2 contained in the second data R2 output from the calculation unit 24-1. The comparison unit 24-2 may, for example, output a determination result as to whether or not the pieces of shared data S1 and S2 match each other.

Furthermore, if the second data is shared data, for example, the determination unit 24 may acquire second encrypted data by encryption of the second data, which is the shared data stored in association with the user identifier contained in the accepted authentication request, using the first data generated by the encryption unit 22, and compare the acquired second encrypted data and the second encrypted data contained in the accepted authentication request, thereby determining whether or not the shared data corresponding to the second encrypted data contained in the authentication request matches the shared data stored in the storage unit 23. In this case, it may be determined that the pieces of shared data match each other in the case in which the pieces of second encrypted data match each other, and that the pieces of shared data do not match each other in the case in which the pieces of second encrypted data do not match each other.

The authentication unit 25 determines that the authentication-target apparatus 1 subjected to authentication is legitimate, in the case of a determination that the pieces of unique information contained in the plurality of authentication requests accepted from the authentication-target apparatus 1 subjected to authentication are consistent, and that the pieces of shared data corresponding to the second encrypted data contained in the plurality of authentication requests each match the shared data stored in the storage unit 23, or otherwise, it determines that the authentication-target apparatus 1 subjected to authentication is not legitimate. In the latter case, for example, the authentication unit 25 may determine that the authentication-target apparatus 1 subjected to authentication is not legitimate in the case in which the pieces of unique information contained in the plurality of authentication requests accepted from the authentication-target apparatus 1 subjected to authentication are not consistent, or may determine that the authentication-target apparatus 1 subjected to authentication is not legitimate in the case in which shared data corresponding to the second encrypted data contained in at least one of the plurality of authentication requests does not match the shared data stored in the storage unit 23.

The plurality of authentication requests used by the authentication unit 25 to determine whether or not the authentication-target apparatus 1 is legitimate may be, for example, a predetermined number of authentication requests, or a plurality of authentication requests accepted within a predetermined period. The period may start, for example, at the time when the first authentication request is accepted.

Hereinafter, determination as to whether or not the pieces of unique information contained in the plurality of authentication requests are consistent will be described. Whether or not the plurality of pieces of unique information are consistent may be determined, for example, by comparing the plurality of pieces of unique information contained in the plurality of authentication requests with a plurality of pieces of unique information generated or acquired by the authentication apparatus 2, or may be determined based on whether or not the plurality of pieces of unique information conform to a predetermined rule.

If the unique information is a counter value or a random number value, for example, the authentication unit 25 may acquire the counter value or the random number value using a function for acquiring a counter value or a random number value, a table such as a random number table, or the like, and compare the acquired counter value or random number value with the counter values or random values that constitute the plurality of pieces of unique information, thereby determining that the plurality of pieces of unique information are consistent in the case in which they all match each other, and that the plurality of pieces of unique information are not consistent in the case in which at least one of them does not match others.

If the unique information is a counter value, for example, the authentication unit 25 may determine that the plurality of pieces of unique information are consistent in the case in which the counter values contained in the plurality of authentication requests satisfy a predetermined rule, or otherwise, it may determine that the plurality of pieces of unique information are not consistent. The predetermined rule may be, for example, "the counter value increments by two" or the like. In this case, for example, the authentication unit 25 may determine that the plurality of pieces of unique information are consistent in the case in which the counter values, which are the unique information contained in the plurality of authentication requests, increment by two when arranged in the order in which the authentication requests are accepted, and that the plurality of pieces of unique information are not consistent in the case in which at least one of the counter values does not increment by two.

If the unique information is a time, for example, for all of the plurality of authentication requests used for authentication of the authentication-target apparatus 1, the authentication unit 25 may determine that the plurality of pieces of unique information are consistent in the case in which the time difference between the time that is the unique information contained in an authentication request and the acceptance time of the authentication request is smaller than a predetermined threshold value, or otherwise it may determine that the plurality of pieces of unique information are not consistent. The acceptance time of the authentication request may be acquired, for example, by the acceptance unit 21 from a clock unit (not shown) when the authentication request is accepted.

If the unique information is a time, for example, the authentication unit 25 may determine that the plurality of pieces of unique information are not consistent in the case in which the time that is the unique information does not increase according to the order of acceptance, for example, in the case in which the time that is the unique information contained in the authentication request accepted at a point in time A indicates a time later than the time that is the unique information contained in the authentication request accepted at a point in time B, which is after the point in time A. That is because in this case, it seems that the authentication request accepted at the point in time B is an authentication request that was originally output from the legitimate authentication-target apparatus 1 before the authentication request accepted at the point in time A and that has been copied and re-output by an attacker's apparatus.

If the unique information is a time, for example, for all of the plurality of authentication requests used for authentication of the authentication-target apparatus 1, the authentication unit 25 may acquire the time difference between the time that is the unique information contained in an authentication request and the acceptance time of the authentication request, and determine that the plurality of pieces of unique information are consistent in the case in which the plurality of acquired time differences are all constant, or otherwise it may determine that the plurality of pieces of unique information are not consistent. In this manner, even when a clock unit of the authentication-target apparatus 1 is not completely synchronized with a clock unit of the authentication apparatus 2, it is possible to properly determine whether or not the plurality of pieces of unique information that are times are consistent. That is because the authentication-target apparatus 1 transfers authentication requests to the authentication apparatus 2 typically over a short distance, and therefore a delay caused by such transfer is considered to be substantially constant for the plurality of authentication requests. The plurality of time differences being constant may mean, for example, that a difference between a maximum value and a minimum value of the plurality of time differences is smaller than a predetermined threshold value, or that a variation (e.g., a variance, a standard deviation, etc.) in the plurality of time differences is smaller than a predetermined threshold value.

The authentication unit 25 may perform, for example, any two or more of the plurality of determinations as to whether or not the plurality of pieces of unique information are consistent. In this case, the authentication unit 25 may ultimately determine that the plurality of pieces of unique information are consistent in the case of a determination that in each of the two or more determinations that the plurality of pieces of unique information are consistent, and ultimately determine that the plurality of pieces of unique information are not consistent in the case of a determination that in at least one of the determinations that the plurality of pieces of unique information are not consistent. Even when the unique information includes any two or more types of information among a time, a counter value, and a random number value, a determination as to whether the information is consistent may be performed for each type of information included in the unique information. In this case as well, the authentication unit 25 may ultimately determine that the plurality of pieces of unique information are consistent in the case in which all types of information are consistent, or otherwise it may ultimately determine that the plurality of pieces of unique information are not consistent.

For example, in the case in which all of the plurality of authentication requests are transmitted from an illegitimate authentication-target apparatus 1, the authentication unit 25 may determine that the authentication-target apparatus 1 is not legitimate. For example, also in the case in which the plurality of authentication requests include an authentication request transmitted from an illegitimate apparatus, the authentication unit 25 will determine that the authentication-target apparatuses 1 that transmitted the plurality of authentication requests is not legitimate. That is to say, also in the case in which the plurality of authentication requests are transmitted from a legitimate authentication-target apparatus 1 and an illegitimate authentication-target apparatus 1, it will be determined that the authentication-target apparatuses 1 that are the transmission source of the plurality of authentication requests are not legitimate. In this case, since at least an attacker's apparatus is included in the transmission source of the authentication requests and the attacker's apparatus cannot be distinguished from a legitimate authentication-target apparatus 1 even when the legitimate apparatus is included in the transmission source, both are determined to be not legitimate.

The authentication result output unit 26 outputs an authentication result that is a determination result obtained by the authentication unit 25. The authentication result may be, for example, information indicating whether the authentication-target apparatus 1 is legitimate or illegitimate. The authentication result output unit 26 may, for example, output the authentication result to a constituent element or device that performs processing according to the authentication result. The authentication result output unit 26 may, for example, output the authentication result also to the authentication-target apparatus 1 that has output the plurality of authentication requests, that is, the authentication-target apparatus 1 that has been subjected to authentication. In this case, the user of the authentication-target apparatus 1 can know the authentication result. If information exchange between the authentication-target apparatus 1 and the authentication apparatus 2 is performed through communication, the authentication result output unit 26 may transmit the authentication result to the authentication-target apparatus 1.

The data output unit 27 may generate shared data and output it to the authentication-target apparatus 1, and may accumulate the shared data in the storage unit 23. The data output unit 27 may, for example, accumulate the shared data output to a certain authentication-target apparatus 1 and a user identifier for identifying a user of that authentication-target apparatus 1 in association with each other in the storage unit 23. If information exchange between the authentication-target apparatus 1 and the authentication apparatus 2 is performed through communication, the data output unit 27 may transmit the shared data to the authentication-target apparatus 1. The transmission may be performed, for example, by unicast. The output of the shared data by the data output unit 27 to the authentication-target apparatus 1 is preferably performed using a secure method to prevent the shared data from being known to third parties, but there is no limitation to this. In the former case, for example, the shared data may be output after being encrypted using an encryption key associated with the user identifier for identifying the user of the authentication-target apparatus 1, stored in the storage unit 23, or may be output via a path separate from the transfer of authentication requests. As an example, if the authentication requests are transmitted and received via short-range wireless communication such as Bluetooth (registered trademark), the shared data may be transmitted and received via a wide-area communication network such as the Internet. If the shared data is output by the data output unit 27 in this manner, the second encrypted data contained in the authentication requests accepted by the acceptance unit 21 from the legitimate authentication-target apparatus 1 is data obtained by encryption of the second data containing the output shared data. In this embodiment, a case will be mainly described in which shared data is transmitted from the authentication apparatus 2 to the authentication-target apparatus 1 so as to prevent the shared data from being known to third parties.

The output by the authentication result output unit 26 and the data output unit 27 may be, for example, transmission via a communication line to a predetermined device, printing by a printer, audio output by a speaker, display on a display device (e.g., a liquid crystal display, an organic EL display, etc.), accumulation in a recording medium, or delivery to another constituent element. The authentication result output unit 26 and the data output unit 27 may or may not include a device that performs output (e.g., a communication device, a display device, etc.). The authentication result output unit 26 and the data output unit 27 may be realized by hardware, or may be realized by software or the like such as a driver that drives those devices.

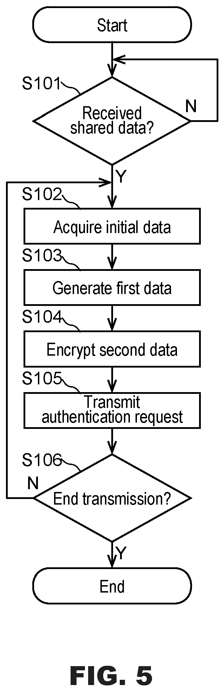

Next, an operation of the authentication-target apparatus 1 will be described with reference to the flowchart in FIG. 5. FIG. 5 is a flowchart showing an authentication request output method, which is processing by the authentication-target apparatus 1 after communication between the authentication-target apparatus 1 and the authentication apparatus 2 is established in FIG. 2. The flowchart in FIG. 5 illustrates the case in which as described above, information exchange between the authentication-target apparatus 1 and the authentication apparatus 2 is performed through communication.

(Step S101) The second data acquisition unit 14 determines whether or not it has received shared data. If it has received shared data, the procedure advances to step S102, or otherwise the processing of step S101 is repeated until shared data is received.

(Step S102) The initial data acquisition unit 12 acquires initial data.

(Step S103) The first encryption unit 13 generates first data using the initial data acquired in step S102.

(Step S104) The second encryption unit 15 acquires second encrypted data by encryption of second data containing the shared data received in step S101, using the first data generated in step S103.

(Step S105) The output unit 16 transmits an authentication request including the initial data acquired in step S102 and the second encrypted data acquired in step S104, to the authentication apparatus 2.

(Step S106) The output unit 16 determines whether or not to end the transmission of authentication requests. If the transmission of authentication requests is to be ended, the series of processing for transmitting a plurality of authentication requests is ended, or otherwise the procedure returns to step S102. For example, the output unit 16 may determine to end the transmission of authentication requests in the case in which a predetermined number of authentication requests have been transmitted or in the case in which a predetermined period has elapsed since transmission of the first authentication request. The determination processing as to whether or not to end the transmission of authentication requests may be performed, for example, by a constituent element other than the output unit 16.

Shorter transmission intervals for authentication requests are preferable. That is because the authentication process by the authentication apparatus 2 will not be complete until the transmission of a plurality of authentication requests is finished. As an example, the transmission intervals for authentication requests may be 200 ms or shorter, or 100 ms or shorter. The processing order in the flowchart in FIG. 5 is merely an example, and the order of the steps may be changed, as long as similar results can be obtained.

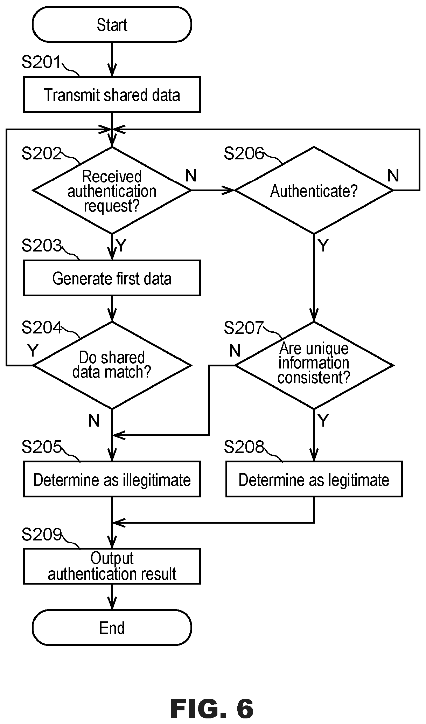

Next, an operation of the authentication apparatus 2 will be described with reference to the flowchart in FIG. 6. FIG. 6 is a flowchart showing an authentication method, which is processing by the authentication apparatus 2 after communication between the authentication-target apparatus 1 and the authentication apparatus 2 is established in FIG. 2. The flowchart in FIG. 6 illustrates the case in which as described above, information exchange between the authentication-target apparatus 1 and the authentication apparatus 2 is performed through communication.

(Step S201) The data output unit 27 generates shared data and transmits it to the authentication-target apparatus 1, and accumulates the shared data in the storage unit 23.

(Step S202) The acceptance unit 21 determines whether or not it has received an authentication request. If it has received an authentication request, the procedure advances to step S203, or otherwise the procedure advances to step S206.

(Step S203) The encryption unit 22 generates first data using initial data contained in the received authentication request.

(Step S204) The determination unit 24 determines whether or not shared data corresponding to the second encrypted data contained in the received authentication request matches the shared data stored in the storage unit 23, using the first data generated in step S203. If they match each other, the procedure returns to step S202, or otherwise the procedure advances to step S205.

(Step S205) The authentication unit 25 determines that the authentication-target apparatus 1 that transmitted the authentication request is not legitimate.

(Step S206) The authentication unit 25 determines whether or not to perform the authentication of the authentication-target apparatus 1 using a plurality of authentication requests. If authentication of the authentication-target apparatus 1 is to be performed, the procedure advances to step S207, or otherwise the procedure returns to step S202. For example, the authentication unit 25 may determine to perform the authentication of a certain authentication-target apparatus 1 in the case in which a predetermined number of authentication requests have been received from the authentication-target apparatus 1 or in the case in which a predetermined period has elapsed since reception of the first authentication request from the authentication-target apparatus 1.

(Step S207) The authentication unit 25 determines whether or not the plurality of pieces of unique information contained in the plurality of authentication requests received from the authentication-target apparatus 1 are consistent. If the plurality of pieces of unique information are consistent, the procedure advances to step S208, or otherwise the procedure advances to step S205.

(Step S208) The authentication unit 25 determines that the authentication-target apparatus 1 that transmitted the authentication requests is legitimate.

(Step S209) The authentication result output unit 26 outputs an authentication result that is a determination result obtained by the authentication unit 25. Then, the series of processing for performing authentication of the authentication-target apparatus 1 is ended.

The processing order in the flowchart in FIG. 6 is merely an example, and the order of the steps may be changed, as long as similar results can be obtained.

Next, the operations of the authentication-target apparatus 1 and the authentication apparatus 2 according to this embodiment will be described by way of a specific example. In this specific example, it is assumed that the legitimate authentication-target apparatus 1 transmits ten authentication requests to the authentication apparatus 2. In this specific example, it is assumed that the unique information is a time, and the authentication unit 25 determines that the ten pieces of unique information are consistent in the case in which the time difference between the time that is the unique information contained in the authentication request and the reception time of the authentication request is constant for all of the ten authentication requests, and in which the time difference between the time that is the unique information and the reception time is smaller than a predetermined threshold value for all of the ten authentication requests. In this specific example, first, a case will be described in which authentication requests are transmitted only from the legitimate authentication-target apparatus 1, followed by the case in which an attacker who is a malicious third party transmits an authentication request by spoofing.

### Transmission of Authentication Requests Only from Legitimate Authentication-target apparatus 1

It is assumed that communication between the authentication-target apparatus 1 and the authentication apparatus 2 is established. It is assumed that at that time, the authentication apparatus 2 acquires the user identifier "U001" of the user of the authentication-target apparatus 1. The data output unit 27 of the authentication apparatus 2 generates shared data that is a random number and transmits it to the authentication-target apparatus 1, and accumulates the shared data and the user identifier "U001" in association with each other in the storage unit 23 (step S201). It is assumed that the number of bits in the shared data is predetermined.

The second data acquisition unit 14 of the authentication-target apparatus 1 receives the shared data transmitted from the authentication apparatus 2, and passes second data, which is the shared data, to the second encryption unit 15 (step S101). The received second data, which is the shared data, may be stored in a recording medium (not shown).

Next, the initial data acquisition unit 12 acquires the current time, reads the user identifier "U001" stored in the storage unit 11, and passes initial data containing unique information, which is the acquired time, and the read user identifier to the encryption unit 22 and the output unit 16 (step S102). Upon receiving the initial data, the encryption unit 22 generates data of a predetermined number of bits by performing padding on the initial data, acquires first encrypted data by encryption of the generated data using the encryption key stored in the storage unit 11, generates first data of a predetermined number of bits by hashing the first encrypted data, and passes it to the second encryption unit 15 (step S103). It is assumed that the number of bits in the first data is the same as the number of bits in the second data.

Upon receiving the first data, the second encryption unit 15 acquires second encrypted data, which is an exclusive OR of the first data and the second data, and passes it to the output unit 16 (step S104). Upon receiving the second encrypted data, the output unit 16 transmits an authentication request including the initial data and the second encrypted data to the authentication apparatus 2 (step S105).

The authentication request transmitted from the authentication-target apparatus 1 is received by the acceptance unit 21 of the authentication apparatus 2, the initial data contained in the authentication request is passed to the encryption unit 22, a pair of the unique information contained in the initial data and the reception time of the authentication request is passed to the authentication unit 25, and the second encrypted data contained in the authentication request is passed to the determination unit 24 (step S202).

Upon receiving the initial data, the encryption unit 22 generates data of a predetermined number of bits by performing padding on the initial data, acquires first encrypted data by encryption of the generated data using the encryption key stored in the storage unit 23 in association with the user identifier "U001" contained in the initial data, generates first data of a predetermined number of bits by hashing the first encrypted data, and passes the first data and the user identifier contained in the initial data to the determination unit 24 (step S203).

Upon receiving the first data and the user identifier, the determination unit 24 acquires shared data that is second data by calculating an exclusive OR of the second encrypted data and the first data, reads the shared data stored in the storage unit 23 in association with the user identifier, and determines whether or not the pieces of shared data match each other (step S204). In this case, it is assumed that the pieces of shared data match each other. Subsequently, the processing of the authentication-target apparatus 1 for transmitting an authentication request and the processing of the authentication apparatus 2 for receiving the authentication request and determining whether or not the two pieces of shared data match each other are repeated (steps S102 to S106 and S202 to S204). In this specific example, it is assumed that for all of the ten authentication requests transmitted from the authentication-target apparatus 1 to the authentication apparatus 2, the two pieces of shared data are determined as matching each other.

If the ten authentication requests are received, the authentication unit 25 determines to perform authentication of the authentication-target apparatus 1 (step S206), acquires a time difference of each of the ten pairs of the unique information that is the time received up to that point and the reception time, and determines whether or not the ten time differences are constant and whether or not the ten time differences are each smaller than a threshold value (step S207). In this specific example, it is assumed that the ten time differences are constant, and the ten time differences are each smaller than a threshold value. The authentication unit 25 determines that the ten pieces of unique information are consistent, determines that the authentication-target apparatus 1 is legitimate, and passes an authentication result that is the determination result to the authentication result output unit 26 (step S208). Upon receiving the authentication result, the authentication result output unit 26 transmits the authentication result to the authentication-target apparatus 1, and outputs it to a constituent element or device that performs processing according to the authentication result (step S209). As a result, the user of the authentication-target apparatus 1, that is, the user identified by the user identifier "U001", can know the authentication result indicating that the user's authentication-target apparatus has been authenticated as being legitimate, and receive services and the like according to the authentication result.

### Transmission of Authentication Requests Using Different Encryption Keys and Shared Data

It is assumed that an apparatus of an attacker who is a malicious third party receives an authentication request transmitted from a legitimate authentication-target apparatus 1, and acquires a user identifier from initial data contained in the authentication request. It is assumed that the attacker's apparatus repeatedly configures new initial data using the acquired user identifier and unique information that is a time when the attacker's device transmits the authentication request, acquires second encrypted data using the initial data in the same manner as that of the authentication-target apparatus 1, and transmits an authentication request including the initial data and the second encrypted data to the authentication apparatus 2. In this case, although the plurality of pieces of unique information are consistent, the malicious third party cannot reproduce the second encrypted data contained in the authentication request transmitted from the legitimate authentication-target apparatus 1 because it does not know an encryption key corresponding to the user identifier and shared data. As a result, the authentication apparatus 2 determines that the shared data corresponding to the second encrypted data contained in the received authentication request does not match the shared data stored in the storage unit 23 (step S204), and the attacker's apparatus is determined not to be legitimate (step S205). In this manner, it is possible to prevent spoofing by an apparatus of an attacker who is a malicious third party that does not know an encryption key and shared data used in the legitimate authentication-target apparatus 1.

Even when the shared data is known to the malicious third party, the third party does not have an encryption key, and thus it cannot reproduce the second encrypted data necessary for being determined to be legitimate. Thus, for example, the shared data may be passed from the authentication apparatus 2 to the authentication-target apparatus 1 via a non-secure path.

### Transmission After Plurality of Authentication Requests

Hereinafter, a case will be described in which an apparatus of an attacker who is a malicious third party receives all authentication requests transmitted from a legitimate authentication-target apparatus 1, and subsequently transmits the plurality of authentication requests to the authentication apparatus 2. If the attacker's apparatus transmits a plurality of authentication requests at transmission intervals different from those of the legitimate authentication-target apparatus 1, the time difference between the time that is the unique information contained in an authentication request and the reception time of the authentication request is not constant, and thus the authentication apparatus 2 determines that the plurality of pieces of unique information are not consistent (step S207), and the attacker's apparatus is determined not to be legitimate (step S205). Even when the attacker's apparatus can transmit a plurality of authentication requests at the same transmission intervals as those of the legitimate authentication-target apparatus 1, if a time exceeding a threshold value has elapsed between the transmission of the authentication request by the legitimate authentication-target apparatus 1 and the transmission of the authentication request by the attacker's apparatus, the time difference between the time that is the unique information contained in the authentication request and the reception time of the authentication request is not smaller than a threshold value, and thus the authentication apparatus 2 determines that the plurality of pieces of unique information are not consistent (step S207), and the attacker's apparatus is determined not to be legitimate (step S205). In this manner, it is possible to prevent spoofing by an attacker's apparatus that has received a plurality of authentication requests.

Lastly, an example of an apparatus, a system, and the like implementing the authentication apparatus 2 according to this embodiment will be briefly described.

The authentication apparatus 2 may be built in an automatic ticket gate. The automatic ticket gate may establish communication with a nearby authentication-target apparatus 1, and transmit shared data to the authentication-target apparatus 1. Upon receiving the shared data, the authentication-target apparatus 1 of a user transmits a plurality of authentication requests to the authentication apparatus 2 of the automatic ticket gate as described above. If the authentication apparatus 2 determines that the authentication-target apparatus 1 is legitimate, using the plurality of authentication requests, the automatic ticket gate opens, and the user can enter or exit the ticketed area through the ticket gate. When the user enters or exits the ticketed area through the ticket gate, payment from the user is made. In this manner, for example, the user can take trains and the like without operating a smartphone or the like that is the authentication-target apparatus 1.

The authentication apparatus 2 may be built in an automatic vending machine for drinks or the like. If a user operates a purchase button of the automatic vending machine, the automatic vending machine may establish communication with a nearby authentication-target apparatus 1, and transmit shared data to the authentication-target apparatus 1. Upon receiving the shared data, the authentication-target apparatus 1 of the user transmits a plurality of authentication requests to the authentication apparatus 2 of the automatic vending machine as described above. If the authentication apparatus 2 determines that the authentication-target apparatus 1 is legitimate, using the plurality of authentication requests, a product such as a drink according to the purchase button that was operated by the user comes out of the automatic vending machine, and the user can receive the product. According to the processing, payment from the user is made as appropriate. In this manner, for example, the user can purchase products from the automatic vending machine without operating a smartphone or the like that is the authentication-target apparatus 1.

The authentication apparatus 2 may be arranged near the entrance to the venue of an event such as a concert, a sport match, or a seminar, an art gallery, a museum, a theme park, a gym, a members-only lounge, or the like. In this case, an encryption key may be used as a ticket for an event or the like, or a membership card. The authentication apparatus 2 may establish communication with a nearby authentication-target apparatus 1, and transmit shared data to the authentication-target apparatus 1. Upon receiving the shared data, the authentication-target apparatus 1 of a user transmits a plurality of authentication requests to the authentication apparatus 2 arranged near the entrance to the venue as described above. If the authentication apparatus 2 determines that the authentication-target apparatus 1 is legitimate, using the plurality of authentication requests, for example, the authentication apparatus 2 may specify the position of the authentication-target apparatus 1 using the intensity of radio waves or the like of the authentication requests, and perform output such that information on a ticket or the like corresponding to the encryption key (e.g., information on the ticket type, information on a ticket holder registered in advance, etc.) is displayed at the specified position. A staff member of the event or the like who looks at the display can specify a person who does not hold a ticket or a membership card, out of the people coming into the venue from the entrance. A staff member may ask a person who does not hold a ticket or the like to present a ticket or the like. In this manner, for example, users can enter event venues, art galleries, gyms, and the like without operating a smartphone or the like that is the authentication-target apparatus 1.

The authentication apparatus 2 may be built in a cash register of a shop. For example, if a user or a shop clerk operates a payment button of the cash register, the cash register may establish communication with a nearby authentication-target apparatus 1, and transmit shared data to the authentication-target apparatus 1. Upon receiving the shared data, the authentication-target apparatus 1 of the user transmits a plurality of authentication requests to the authentication apparatus 2 of the cash register as described above. If the authentication apparatus 2 determines that the authentication-target apparatus 1 is legitimate, using the plurality of authentication requests, payment according to the purchase prices may be made from a payment method (e.g., a credit card, electronic money, etc.) registered in association with the key of symmetric-key cryptography, and the user may receive purchased items such as products. In this manner, for example, the user can purchase products and the like at shops without operating a smartphone or the like that is the authentication-target apparatus 1.

The authentication apparatus 2 may be built in an apparatus that requires identity verification such as a PC (personal computer) or an ATM (automated teller machine). For example, if a user operates the apparatus such as a PC or an ATM, the apparatus may establish communication with a nearby authentication-target apparatus 1, and transmit shared data to the authentication-target apparatus 1. Upon receiving the shared data, the authentication-target apparatus 1 of the user transmits a plurality of authentication requests to the authentication apparatus 2 of the apparatus as described above. If the authentication apparatus 2 determines that the authentication-target apparatus 1 is legitimate, using the plurality of authentication requests, for example, the user registered in association with a key of symmetric-key cryptography is allowed to log into the PC, to log into a website on which an operation is performed on the PC, or to withdraw cash from the ATM. In this manner, for example, the user can verify his or her identity on an apparatus such as a PC or an ATM without inputting passcodes or the like, and operate that apparatus.

Furthermore, the authentication-target apparatus 1 and the authentication apparatus 2 according to this embodiment can be used in situations other than those described above. For example, they can be used in authentication for car sharing, car rental, airplane boarding procedures, or the like. For example, they can be used in identity verification when operating a device such as a personal computer.

The above examples mainly described the cases in which shared data is transmitted after communication between the authentication-target apparatus 1 and the authentication apparatus 2 is established, but there is no limitation to this. The authentication apparatus 2 may, for example, transmit shared data that varies over time via beacon or other broadcasts. The authentication-target apparatus 1 may then generate and transmit authentication requests using the shared data received from the authentication apparatus 2. In this case, the association between the shared data and the user identifier in the authentication apparatus 2 may be performed when the first authentication request is received. As an example, if the shared data that matches the shared data contained in the second data obtained by decryption of the second encrypted data contained in the first authentication request received from the authentication-target apparatus 1 subjected to authentication is stored in the storage unit 23, the authentication apparatus 2 may associate the user identifier contained in the received first authentication request with the shared data stored in the storage unit 23.

Furthermore, it is also possible that shared data is transmitted from the authentication apparatus 2 to the authentication-target apparatus 1 before communication between the authentication-target apparatus 1 and the authentication apparatus 2 is established. In this case, for example, one piece of shared data may be transmitted, or a plurality of pieces of shared data may be transmitted. In the latter case, the authentication-target apparatus 1 may, for example, use different shared data for each authentication. Furthermore, the transmission of shared data from the authentication apparatus 2 to the authentication-target apparatus 1 may be performed, for example, via a different path from the authentication requests, or via the same path as the authentication requests. In the latter case, the shared data may be, for example, transmitted in an encrypted form.

As described above, with the authentication-target apparatus 1 and the authentication apparatus 2 according to this embodiment, the second encrypted data contained in the authentication requests is obtained by encryption of the second data using the first data, and thus, for example, if the first data is generated using first encrypted data obtained by encryption of the initial data using an encryption key, a malicious third party cannot newly generate the second encrypted data contained in the authentication requests. Thus, the malicious third party cannot newly generate authentication requests necessary for being determined to be legitimate. Thus, it is possible to prevent spoofing. Even if a malicious third party acquires authentication requests transmitted from the legitimate authentication-target apparatus 1, and transmits the authentication requests to the authentication apparatus 2, for example, if the unique information is a time, it can be determined that the apparatus used by the malicious third party to transmit the authentication requests is not the legitimate authentication-target apparatus 1, by using the time difference between the time that is the unique information and the reception time of the authentication requests. Also, if the unique information is a counter value or a random number value, as long as the counter value or random value generated varies depending on the time period, the unique information that is the counter value or the random number value cannot be reused in other situations, and thus it is possible to prevent spoofing by a malicious third party.

Furthermore, since the initial data contains unique information that is unique, the first data generated using the initial data can be made different each time. That is to say, the first data can also be made uniquely determined data, similar to the unique information. Thus, the second encrypted data obtained by encryption of the second data using the first data can also be made different each time. As a result, it is difficult to predict the second data. It is also possible to reduce the data amount of the second encrypted data by reducing the data amount of the first encrypted data. Therefore, it is possible to reduce the data amount of the authentication requests.

Furthermore, since the authentication requests include initial data, the authentication apparatus 2 that has received the authentication requests can perform authentication of the authentication-target apparatus 1 using the authentication requests, and can acquire information, for example, a user identifier and the like necessary for processing after the authentication-target apparatus 1 is authenticated as being legitimate. Thus, there is no need for the authentication-target apparatus 1 to transmit the information necessary for post-authentication processing after authentication, and the post-authentication processing can be performed sooner. As described above, the initial data may, for example, further contain the information necessary for post-authentication processing.

Furthermore, the authentication requests each include initial data that is plaintext data, and whether or not the shared data corresponding to the second encrypted data matches the shared data stored in the authentication apparatus 2 is determined using the initial data. Thus, as a result, it is possible to see whether or not the initial data contained in the authentication requests is correct. Therefore, for example, even if a malicious third party transmits authentication requests obtained by modifying the initial data contained in the authentication requests to the authentication apparatus 2, the shared data corresponding to the second encrypted data contained in the authentication requests does not match the shared data stored in the authentication apparatus 2. Accordingly, the transmission source apparatus of the authentication requests is determined not to be legitimate, and thus it is possible to prevent spoofing.

In this embodiment, the case has been mainly described in which the information exchange between the authentication-target apparatus 1 and the authentication apparatus 2 is performed through communication, but as described above, the information exchange between the apparatuses may be performed using a method other than communication. For example, the information exchange may be performed, for example, by displaying information and reading the displayed information, by outputting and receiving light flashing signals, by outputting and receiving sound waves or ultrasonic waves, or by other information exchange methods. If the information exchange between the apparatuses is performed by displaying information and reading the displayed information, for example, the information to be output may be displayed on a display device as an image of a code such as a barcode or a two-dimensional code, and the displayed code image may then be captured and read by an imaging device such as a camera, thereby enabling the information exchange between the authentication-target apparatus 1 and the authentication apparatus 2. For example, the output unit 16 of the authentication-target apparatus 1 may display a barcode or two-dimensional code for an authentication request. The acceptance unit 21 of the authentication apparatus 2 may acquire the authentication request, for example, from a captured image obtained by capturing an image of the displayed code. For example, the data output unit 27 of the authentication apparatus 2 may display a barcode or two-dimensional code of shared data. The second data acquisition unit 14 of the authentication-target apparatus 1 may acquire the shared data, for example, from a captured image obtained by capturing an image of the displayed code. If the information exchange between the apparatuses is performed by outputting and receiving light flashing signals, for example, the information to be output may be emitted as a light flashing signal from an emitter, and the output light flashing signal may be received by a receiver, thereby enabling the information exchange between the authentication-target apparatus 1 and the authentication apparatus 2. If the information exchange between the apparatuses is performed by outputting and receiving sound waves or ultrasonic waves, for example, the information to be output may be output as sound waves or ultrasonic waves from an output unit, and the output sound waves or ultrasonic waves may be received by a receiving unit, thereby enabling the information exchange between the authentication-target apparatus 1 and the authentication apparatus 2.

Furthermore, in this embodiment, the case has been mainly described in which the first encrypted data is data obtained by encryption of the initial data using an encryption key corresponding to the user identifier contained in the initial data, but there is no limitation to this. The first encrypted data may be data obtained through encryption without using an encryption key. In this case, for example, the first encryption unit 13 may generate first data by acquisition of first encrypted data obtained by encryption of the initial data, and the encryption unit 22 may generate first data by acquisition of first encrypted data obtained by encryption of the initial data contained in the authentication requests accepted by the acceptance unit 21. In this case, for example, the first encrypted data itself may be the first data.

The encryption without using an encryption key may be, for example, processing for reducing the data amount of the initial data. This processing may be, for example, hashing, extraction of a part of the data, a combination thereof, or any other processing for reducing the data amount. The processing of encryption without using an encryption key may be, for example, different for each authentication-target apparatus 1, or may be common between a plurality of authentication-target apparatuses 1. In the former case, the encryption unit 22 of the authentication apparatus 2 may acquire first encrypted data through encryption processing corresponding to the user identifier contained in the accepted authentication requests. In this case, a malicious third party cannot generate first data from the initial data, and thus it is possible to prevent spoofing by the malicious third party. Even when the encryption processing without using an encryption key is common between a plurality of authentication-target apparatuses 1, for example, it is possible to perform proper authentication, as long as the common data is not known to a malicious third party and the encryption performed by the second encryption unit 15 cannot be decrypted using the first data. In this case, for example, the second data may be the common data.

Furthermore, in this embodiment, the second data may be, for example, data containing data other than the shared data, as described above. In this case, for example, data containing the shared data and other data may be encrypted using the first data to obtain the second encrypted data. By encryption of information other than the shared data as well, it is possible output information that is not desired to be known by a third party, from the authentication-target apparatus 1 to the authentication apparatus 2. In this case, when determining whether or not the shared data corresponding to the second encrypted data matches the shared data stored in the storage unit 23 of the authentication apparatus 2, it is preferable to compare the shared data contained in the second data acquired by decryption of the second encrypted data using the first data and the shared data stored in the storage unit 23. In this manner, through decryption of the second encrypted data, the authentication apparatus 2 can also acquire information other than the shared data encrypted together with the shared data.

Furthermore, in this embodiment, the case has been mainly described in which when the shared data is output from the authentication apparatus 2 to the authentication-target apparatus 1, the entire shared data is output, but there is no limitation to this. For example, first part, which is part of the shared data, may be output from the authentication apparatus 2 to the authentication-target apparatus 1. In this case, second part, which is the remaining part of the shared data, may be, for example, held in advance in the authentication apparatus 2 and the authentication-target apparatus 1, or may be passed from the authentication apparatus 2 to the authentication-target apparatus 1 via a different path from the first part. In this case, for example, the first part of the shared data may be used commonly across a plurality of authentication-target apparatuses 1, and the second part may be different for each authentication-target apparatus 1. As an example, the authentication apparatus 2 may transmit the first part of the shared data via broadcasts, and the authentication-target apparatus 1 that has received the first part may configure shared data using the received first part and the held second part. As another example, the authentication apparatus 2 may transmit the first part of the shared data to the authentication-target apparatus 1 via a first path, and transmit the second part of the shared data to the authentication-target apparatus 1 via a second path different from the first path. The first path may be, for example, a path such as a short-range wireless communication path where authentication requests are transmitted and received. The second path may be, for example, a path such as a wide-area communication network path like the Internet.

Furthermore, in this embodiment, the case has been described in which the shared data is output from the authentication apparatus 2 to the authentication-target apparatus 1, but as described above, the shared data may be generated by the authentication-target apparatus 1. In this case, the authentication apparatus 2 does not have to include the data output unit 27. In this case, the authentication apparatus 2 may further include, for example, a shared data generation unit for generating the same shared data as the authentication-target apparatus 1.

Furthermore, in this embodiment, the case has been mainly described in which data having a predetermined data amount and containing the initial data is used to acquire the first encrypted data, but there is no limitation to this. For example, the first encrypted data may be acquired by encryption of the initial data itself using the encryption key. In this case, for example, the data amount of each piece of data contained in the initial data may be predetermined. With this configuration, for example, it is possible to make the data amount of the first encrypted data to a predetermined data amount.

Furthermore, in this embodiment, the case has been mainly described in which the encryption of the second data using the first data is performed by calculating an exclusive OR, but there is no limitation to this. For example, it will be appreciated that the encryption of the second data may be performed using the first data as an encryption key by another encryption method.

Furthermore, in the case in which authentication requests are transmitted wirelessly from the authentication-target apparatus 1 to the authentication apparatus 2, depending on the wireless communication standard, a single authentication request may be made redundant and transmitted a plurality of times, and the same authentication request transmitted a plurality of times may be received simultaneously by the authentication apparatus 1. In this case, only one of the plurality of authentication requests received simultaneously may be used for the authentication process, and the other authentication requests may not be used for the authentication process. Even in such cases, it is generally considered rare for the same authentication request to be received a plurality of times at the authentication apparatus 2. Thus, for example, at the authentication apparatus 2, if all authentication requests of the plurality of authentication requests used in one authentication process are received two or more times or if a predetermined percentage or more (e.g., 50% or more, 80% or more) of the authentication requests are received two or more times, the authentication unit 25 of the authentication apparatus 2 may determine that the transmission source of the authentication requests includes an apparatus of an attacker who is a malicious third party, and that the authentication-target apparatus 1 is not legitimate.

Furthermore, in the foregoing embodiment, each process or each function may be realized as centralized processing using a single apparatus or a single system, or may be realized as distributed processing using multiple apparatuses or multiple systems.

Furthermore, in the foregoing embodiment, information transmission performed between constituent elements may be such that, for example, if two constituent elements for transmitting information are physically different from each other, the transmission is performed by one of the constituent elements outputting the information and the other constituent element accepting the information, or alternatively, if two constituent elements for transmitting information are physically the same, the transmission is performed by shifting from a processing phase corresponding to one of the constituent elements to a processing phase corresponding to the other constituent element.

Furthermore, in the foregoing embodiment, information related to the processing that is performed by each constituent element, for example, information that is to be accepted, acquired, selected, generated, transmitted, or received by each constituent element, information such as a threshold value, a numerical expression, or an address used by each constituent element in the processing and the like may be retained in an unshown storage medium temporarily or for a long period of time even if not specified in the description above. Furthermore, the information may be accumulated in the unshown storage medium by each constituent element or by an unshown accumulating unit. Furthermore, the information may be read from the unshown storage medium by each constituent element or by an unshown reading unit.

Furthermore, in the foregoing embodiment, if information used in each constituent element or the like, for example, information such as a threshold value, an address, or various setting values used in each constituent element in the processing may be changed by a user, and the user may be or may not be allowed to change such information as appropriate even if not specified in the description above. If the user is allowed to change such information, the change may be realized by, for example, an unshown accepting unit that accepts a change instruction from the user and an unshown changing unit that changes information according to the change instruction. The change instruction may be accepted by the unshown accepting unit, for example, by accepting information from an input device, by receiving information transmitted via a communication line, or by accepting information read from a predetermined storage medium.

Furthermore, in the foregoing embodiment, if two or more constituent elements included in the authentication-target apparatus 1 or the authentication apparatus 2 have a communication device, an input device, or the like, the two or more constituent elements may have a physically single device, or may have different devices.

Furthermore, in the foregoing embodiment, each constituent element may be configured by dedicated hardware, or alternatively, constituent elements that can be realized by software may be realized by executing a program. For example, each constituent element may be realized by a program execution unit such as a CPU reading and executing a software program stored in a storage medium such as a hard disk or a semiconductor memory. At the time of executing the program, the program execution unit may execute the program while accessing the storage unit or the storage medium. Software that realizes the authentication-target apparatus 1 according to the foregoing embodiment may be a program as follows. Specifically, this program is a program for causing a computer to execute: an initial data acquisition unit that acquires initial data containing a user identifier for identifying a user and unique information that is unique; a first encryption unit that generates first data by acquisition of first encrypted data obtained by encryption of the initial data; a second data acquisition unit that acquires second data containing shared data shared with an authentication apparatus; a second encryption unit that generates second encrypted data by encryption of the second data using the first data; and an output unit that outputs, to the authentication apparatus, a plurality of different authentication requests each including the initial data and the second encrypted data.

Software that realizes the authentication apparatus 2 according to the foregoing embodiment may be a program as follows. Specifically, this program is a program for causing a computer capable of accessing a storage unit in which shared data shared with a legitimate authentication-target apparatus is stored, to function as: an acceptance unit that accepts, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data; a first encryption unit that generates first data by acquisition of first encrypted data obtained by encryption of the initial data contained in the authentication requests accepted by the acceptance unit; a determination unit that determines whether or not shared data corresponding to the second encrypted data contained in the authentication requests accepted by the acceptance unit matches the shared data stored in the storage unit, using the first data generated by the first encryption unit; an authentication unit that determines that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and an authentication result output unit that outputs an authentication result that is a determination result obtained by the authentication unit.

In the above-described program, the functions realized by the program do not include processing that can only be performed by hardware. For example, the functions realized by the program do not include at least processing that can only be performed by hardware such as a modem or an interface card in an acquisition unit that acquires information, an output unit that outputs information, and the like.

Furthermore, this program may be executed by downloading from a server or the like, or may be executed by reading a program stored in a predetermined storage medium (e.g., an optical disk such as a CD-ROM, a magnetic disk, a semiconductor memory, etc.). Furthermore, the program may be used as a program for constituting a program product.

Furthermore, a computer that executes the program may be a single computer or may be multiple computers. That is to say, centralized processing may be performed, or distributed processing may be performed.

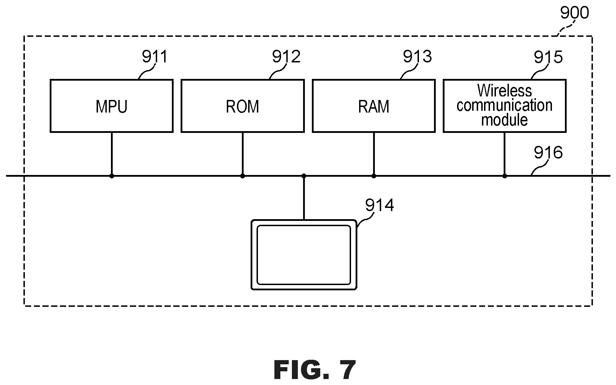

FIG. 7 is a view showing an example of a computer system 900 that executes the above-described programs to realize the authentication-target apparatus 1 and the authentication apparatus 2 according to the foregoing embodiment. The foregoing embodiment may be realized using computer hardware and computer programs executed thereon.

In FIG. 7, the computer system 900 includes an MPU (micro processing unit) 911, a ROM 912 such as a flash memory in which a program such as a boot up program, an application program, a system program, and data are to be stored, an RAM 913 that is connected to the MPU 911 and in which a command of an application program is temporarily stored and a temporary storage area is provided, a touch panel 914, a wireless communication module 915, and a bus 916 that connects the MPU 911, the ROM 912, and the like. If the information exchange between the authentication-target apparatus 1 and the authentication apparatus 2 is performed using a method other than communication, the computer system 900 may further include devices used for that information exchange, such as a camera, a light-emitting device, or a light-receiving device, as needed. Instead of the touch panel 914, an input device constituted by a display, and a mouse, a keyboard, or the like may be included.

The program for causing the computer system 900 to execute the functions of the authentication-target apparatus 1 and the authentication apparatus 2 according to the foregoing embodiment may be stored in the ROM 912 via the wireless communication module 915. The program is loaded into the RAM 913 at the time of execution. The program may be loaded directly from a network.

The program does not necessarily have to include, for example, an operating system (OS) or a third party program to cause the computer system 900 to execute the functions of the authentication-target apparatus 1 and the authentication apparatus 2 according to the foregoing embodiment. The program may only include a command portion to call an appropriate function or module in a controlled mode and obtain desired results. The manner in which the computer system 900 operates is well known, and thus a detailed description thereof has been omitted.

Furthermore, the foregoing embodiment is an example for specific implementation of the present invention and is not intended to limit the technical scope of the invention. The technical scope of the invention is indicated by the claims rather than by the foregoing description, and changes which come within the wording and equivalent meanings of the scope of the claims are intended to be encompassed therein.

## Claims

1. An authentication-target apparatus comprising:
an initial data acquisition unit that acquires initial data containing a user identifier for identifying a user and unique information that is unique;
a first encryption unit that generates first data by acquisition of first encrypted data obtained by encryption of the initial data;
a second data acquisition unit that acquires second data containing shared data shared with an authentication apparatus;
a second encryption unit that generates second encrypted data by encryption of the second data using the first data; and
an output unit that outputs, to the authentication apparatus, a plurality of different authentication requests each including the initial data and the second encrypted data.

2. The authentication-target apparatus according to claim 1, wherein the unique information includes at least one of a time, a counter value, and a random number value.

3. The authentication-target apparatus according to claim 1, wherein the first encryption unit acquires first encrypted data obtained by encryption of the initial data using an encryption key corresponding to the user identifier contained in the initial data.

4. The authentication-target apparatus according to claim 3, wherein the first encryption unit acquires first encrypted data obtained by encryption of data having a predetermined data amount and containing the initial data, using the encryption key.

5. The authentication-target apparatus according to claim 1, wherein the first encryption unit generates the first data by reducing a data amount of the first encrypted data.

6. The authentication-target apparatus according to claim 5, wherein the first encryption unit reduces the data amount by hashing the first encrypted data.

7. The authentication-target apparatus according to claim 5, wherein the first encryption unit reduces the data amount by extracting a part of the first encrypted data.

8. The authentication-target apparatus according to any one of claims 1 to 7,
wherein the first data and the second data have a same data amount, and
the second encryption unit generates second encrypted data that is an exclusive OR of the first data and the second data.

9. The authentication-target apparatus according to any one of claims 1 to 7, wherein the second data acquisition unit acquires the shared data from the authentication apparatus.

10. The authentication-target apparatus according to any one of claims 1 to 7, wherein the shared data includes a random number.

11. An authentication apparatus comprising:
an acceptance unit that accepts, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data;
an encryption unit that generates first data by acquisition of first encrypted data obtained by encryption of the initial data contained in the authentication requests accepted by the acceptance unit;
a storage unit in which shared data shared with a legitimate authentication-target apparatus is stored;
a determination unit that determines whether or not shared data corresponding to the second encrypted data contained in the authentication requests accepted by the acceptance unit matches the shared data stored in the storage unit, using the first data generated by the encryption unit;
an authentication unit that determines that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and
an authentication result output unit that outputs an authentication result that is a determination result obtained by the authentication unit.

12. The authentication apparatus according to claim 11, wherein the unique information includes at least one of a time, a counter value, and a random number value.

13. The authentication apparatus according to claim 11, wherein the encryption unit acquires first encrypted data obtained by encryption of the initial data contained in the authentication requests accepted by the acceptance unit, using an encryption key corresponding to the user identifier contained in the initial data.

14. The authentication apparatus according to claim 13, wherein the encryption unit acquires first encrypted data obtained by encryption of data having a predetermined data amount and containing the initial data contained in the authentication requests accepted by the acceptance unit, using the encryption key.

15. The authentication apparatus according to claim 11, wherein the encryption unit generates the first data by reducing a data amount of the acquired first encrypted data.

16. The authentication apparatus according to any one of claims 11 to 15,
wherein the first data and the second data have a same data amount, and
the second encrypted data is an exclusive OR of the first data and the second data.

17. The authentication apparatus according to any one of claims 11 to 15, further comprising:
a data output unit that generates shared data, outputs the generated shared data to the authentication-target apparatus, and accumulates the generated shared data in the storage unit,
wherein the second encrypted data contained in the authentication requests accepted by the acceptance unit is data obtained by encryption of second data containing the shared data output by the data output unit.

18. The authentication apparatus according to any one of claims 11 to 15, wherein the shared data includes a random number.

19. An authentication request output method comprising:
a step of acquiring initial data containing a user identifier for identifying a user and unique information that is unique;
a step of generating first data by acquisition of first encrypted data obtained by encryption of the initial data;
a step of acquiring second data containing shared data shared with an authentication apparatus;
a step of generating second encrypted data by encryption of the second data using the first data; and
a step of outputting, to the authentication apparatus, a plurality of different authentication requests each including the initial data and the second encrypted data.

20. An authentication method comprising:
a step of accepting, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data;
a step of generating first data by acquisition of first encrypted data obtained by encryption of the initial data contained in the accepted authentication requests;
a determination unit that determines whether or not shared data corresponding to the second encrypted data contained in the accepted authentication requests matches shared data stored in a storage unit in which shared data shared with a legitimate authentication-target apparatus is stored, using the first data generated in the step of generating first data;
a step of determining that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and
a step of outputting an authentication result that is a determination result obtained in the step of determining whether or not the authentication-target apparatus subjected to authentication is legitimate.

21. A program for causing a computer to function as:
an initial data acquisition unit that acquires initial data containing a user identifier for identifying a user and unique information that is unique;
a first encryption unit that generates first data by acquisition of first encrypted data obtained by encryption of the initial data;
a second data acquisition unit that acquires second data containing shared data shared with an authentication apparatus;
a second encryption unit that generates second encrypted data by encryption of the second data using the first data; and
an output unit that outputs, to the authentication apparatus, a plurality of different authentication requests each including the initial data and the second encrypted data.

22. A program for causing a computer capable of accessing a storage unit in which shared data shared with a legitimate authentication-target apparatus is stored, to function as:
an acceptance unit that accepts, from an authentication-target apparatus, a plurality of different authentication requests, each including initial data containing a user identifier for identifying a user and unique information that is unique, and second encrypted data obtained by encryption of second data containing shared data using first data generated by acquisition of first encrypted data obtained by encryption of the initial data;
an encryption unit that generates first data by acquisition of first encrypted data obtained by encryption of the initial data contained in the authentication requests accepted by the acceptance unit;
a determination unit that determines whether or not shared data corresponding to the second encrypted data contained in the authentication requests accepted by the acceptance unit matches the shared data stored in the storage unit, using the first data generated by the encryption unit;
an authentication unit that determines that the authentication-target apparatus subjected to authentication is legitimate, in a case of a determination that the pieces of unique information contained in the plurality of authentication requests accepted from the authentication-target apparatus subjected to authentication are consistent, and that the pieces of shared data corresponding to the second encrypted data contained in the plurality of authentication requests each match the shared data stored in the storage unit; and
an authentication result output unit that outputs an authentication result that is a determination result obtained by the authentication unit.
